(19) Europäisches Patentamt
European Patent Office
Office européen des brevets

(11) EP 2 651 723 B1

(12) **EUROPÄISCHE PATENTSCHRIFT**

(45) Veröffentlichungstag und Bekanntmachung des Hinweises auf die Patenterteilung:
**16.03.2016 Patentblatt 2016/11**

(21) Anmeldenummer: **11804659.8**

(22) Anmeldetag: **08.12.2011**

(51) Int Cl.:
*B60T 7/10* (2006.01)     *B60T 13/58* (2006.01)
*B60T 13/74* (2006.01)     *B60T 17/22* (2006.01)

(86) Internationale Anmeldenummer:
**PCT/EP2011/072223**

(87) Internationale Veröffentlichungsnummer:
**WO 2012/080085 (21.06.2012 Gazette 2012/25)**

(54) **VERFAHREN ZUM EINSTELLEN DER VON EINER FESTSTELLBREMSE AUSGEÜBTEN STELLKRAFT**

METHOD FOR ADJUSTING THE ACTUATING FORCE APPLIED BY A PARKING BRAKE

PROCÉDÉ DE RÉGLAGE DE LA FORCE DE SERRAGE EXERCÉE PAR UN FREIN DE STATIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2010 DE 102010063359**

(43) Veröffentlichungstag der Anmeldung:
**23.10.2013 Patentblatt 2013/43**

(73) Patentinhaber: **Robert Bosch GmbH**
**70442 Stuttgart (DE)**

(72) Erfinder:
• **BIELTZ, Karsten**
**74395 Mudelsheim (DE)**
• **HAUBER, Simon**
**71691 Freiberg Am Neckar (DE)**

(56) Entgegenhaltungen:
**DE-A1- 10 035 220**     **DE-A1- 19 853 721**
**DE-A1-102009 028 505**     **DE-B3- 10 361 042**
**GB-A- 2 156 021**

**Beschreibung**

Die Erfindung bezieht sich auf ein Verfahren zum Einstellen der von einer Feststellbremse ausgeübten Klemmkraft in einem Fahrzeug.

Stand der Technik

In der DE 103 61 042 B3 oder in der DE 10035220 A1 wird eine elektromechanische Feststellbremse beschrieben, deren Aktuator als elektrischer Bremsmotor ausgeführt ist. Bei Betätigung des Bremsmotors wird ein Bremskolben mit einem Bremsbelag axial gegen die Stirnseite einer Bremsscheibe verstellt. Die Höhe der elektromechanischen Bremskraft wird über die Bestromung des Bremsmotors eingestellt.

Bekannt ist es darüber hinaus, elektromechanische Feststellbremsen mit einer hydraulischen Fahrzeugbremse zu koppeln, indem der Bremskolben der Feststellbremse zusätzlich von dem Druck der hydraulischen Fahrzeugbremse beaufschlagt wird. Die gesamte zu stellende Klemmkraft setzt sich in diesem Fall aus einem elektromechanischen Anteil und einem hydraulischen Anteil zusammen. Der hydraulische Druck wird bedarfsweise und ergänzend zum elektromechanischen Klemmkraftanteil bereitgestellt. Für eine präzise Einstellung der Klemmkraft ist es daher erforderlich, die hydraulische Klemmkraftunterstützung möglichst genau zu kennen.

Offenbarung der Erfindung

Der Erfindung liegt die Aufgabe zu Grunde, mit einfachen Maßnahmen die Klemmkraft in einer Feststellbremse mit mechanischer Bremsvorrichtung bei zusätzlicher hydraulischer Unterstützung mit ausreichender Genauigkeit bereitzustellen.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren kann bei elektromechanischen Feststellbremsen in Fahrzeugen verwendet werden, die einen elektrischen Aktuator zur Erzeugung einer Klemmkraft zum Festsetzen des Fahrzeugs im Stillstand aufweisen. Bei dem elektrischen Aktuator handelt es sich vorzugsweise um einen elektrischen Bremsmotor, dessen Rotationsbewegung in eine axiale Stellbewegung eines Bremskolbens umgesetzt wird, welcher Träger eines Bremsbelages ist und gegen die Stirnseite einer Bremsscheibe gedrückt wird. Grundsätzlich möglich sind aber auch sonstige Ausführungen elektromechanischer Bremsvorrichtungen, beispielsweise elektromagnetische Stellglieder.

Zur Klemmkraftunterstützung dient eine hydraulische Bremsvorrichtung, deren hydraulischer Druck unterstützend an dem Bremskolben anliegt, so dass sich die Gesamtklemmkraft aus einem elektromotorisch erzeugten Anteil und einem hydraulisch erzeugten Anteil zusammensetzt. Bei der hydraulischen Bremsvorrichtung handelt es sich vorzugsweise um die reguläre Fahrzeugbremse. Die hydraulische Klemmkraft wird bedarfsweise und ergänzend zu der elektromechanischen Klemmkraft erzeugt.

Der Fahrer kann durch Betätigen des Bremspedals im Zeitpunkt der Erzeugung einer elektromechanischen Klemmkraft einen hydraulischen Vordruck im Bremssystem erzeugen. Der Vordruck kann zu einer virtuellen Verschiebung insbesondere eines Kraftanstiegspunktes im Verlauf der erzeugten Klemmkraft führen, was zur Folge hat, dass die Feststellbremse von einer höheren, wirksamen Klemmkraft ausgeht, als dies tatsächlich der Fall ist. Dies führt zu einer entsprechend reduzierten Betätigung des elektrischen Aktuators der elektromechanischen Bremsvorrichtung und damit zur Einstellung eines zu geringen Klemmkraftniveaus.

Um den Einfluss des hydraulischen Vordrucks in korrekter Weise zu erfassen und ggf. kompensierende Maßnahmen ergreifen zu können, wird ein Vergleich angestellt zwischen einem Druckreferenzweg, der dem aktuell im System herrschenden hydraulischen Druck entspricht, und einem Aktuatorweg des elektrischen Aktuators, welcher aus einer motorischen Zustandsgröße des Aktuators ermittelt wird. Ergibt der Vergleich, dass der Druckreferenzweg und der Aktuatorweg signifikant voneinander abweichen, so muss davon ausgegangen werden, dass die Information über den hydraulischen Druck im System nicht in hinreichender Weise vertrauenswürdig ist. Insbesondere im Falle eines gemessenen Drucks ist bei einer Abweichung von Druckreferenzweg und Aktuatorweg von einer nicht ausreichenden Plausibilität auszugehen. In diesem Fall bleibt der hydraulische Anteil der Klemmkraft unberücksichtigt, und es wird die Gesamtklemmkraft vollständig über die elektromotorische Bremsvorrichtung gestellt, ungeachtet einer etwaigen hydraulischen Klemmkraft.

Ergibt dagegen der Vergleich, dass der Druckreferenzweg und der Aktuatorweg mit hinreichender Genauigkeit übereinstimmen, so kann von ausreichender Plausibilität des Drucksignals ausgegangen werden und der hydraulische Klemmkraftanteil beim Stellen der Gesamtstellkraft berücksichtigt werden. In diesem Fall reduziert sich der elektromechanische Klemmkraftanteil entsprechend.

Zur Bestimmung des Druckreferenzwegs muss der aktuell wirkende hydraulische Druck im hydraulischen Bremssystem ermittelt werden, entweder über eine Messung oder aus einem Schätzverfahren. Die Ermittlung des Aktuatorwegs erfolgt dagegen aus einer motorischen Zustandsgröße des elektrischen Aktuators, welche ebenfalls entweder gemessen oder nach einem Schätzverfahren ermittelt wird. Als motorische Zustandsgrößen, welche der Ermittlung des Aktuatorwegs zu Grunde gelegt werden, kommen insbesondere der vom Aktuator aufgenommene Strom, die angelegte Spannung und/oder die Drehzahl in Betracht.

Der Aktuatorweg wird zwischen zwei charakteristischen Referenzpunkten ermittelt. So ist es beispielsweise zweckmäßig, einen Leerweg in der Aktuator-Stellbewegung zu ermitteln, welchen der Aktuator zwischen einem ersten Referenzpunkt und einem Kraftanstiegspunkt zurücklegt, bei dem der Kraftanstieg der elektromechanischen Klemmkraft beginnt. Der erste Referenzpunkt fällt beispielsweise mit dem Anschlagspunkt des Aktuator im zurückgezogenen Außerbetriebszustand zusammen. Der Kraftanstiegspunkt kann als markante Stelle im Verlauf der motorischen Zustandsgrößen in verhältnismäßig einfacher Weise ermittelt werden. Insbesondere der Stromverlauf eines elektrischen Bremsmotors korrespondiert mit dem Kraftverlauf der gestellten elektromechanischen Klemmkraft, so dass beim Zustellen bzw. Schließen der elektromechanischen Bremsvorrichtung aus dem Anstieg des Stromverlaufs, ausgehend von einem Leerlaufstrom, auf den Kraftanstiegspunkt geschlossen werden kann. Der Kraftanstiegspunkt korrespondiert mit dem Lastfreiheitspunkt, da bis zum Erreichen dieses Punktes der elektrische Aktuator noch keine Klemmkraft überträgt.

Der auf diese Weise ermittelte Leerweg des Aktuators wird mit einem zugeordneten Druckreferenzweg verglichen, der sich aus einer Kennlinie ergibt, welche den Zusammenhang zwischen den im System anliegenden Druck und dem zugeordneten Weg ergibt, den die hydraulische Bremsvorrichtung zur Erzeugung dieses Drucks ausüben muss. Der Druckreferenzweg wird, gemäß einer weiteren vorteilhaften Ausführung, aus dem Leerweg des Aktuators während der Öffnungsbewegung und einem Differenzweg beim anliegenden Druck ermittelt. Der Leerweg des Aktuators bei der Öffnungsbewegung wird wie vorbeschrieben aus den motorischen Zustandsgrößen bestimmt. Der Differenzweg beim anliegenden Druck wird vorzugsweise bei der Schließbewegung des Aktuators bestimmt. Auch der zum Vergleich herangezogene Aktuatorweg wird beim Schließen der elektromechanischen Bremsvorrichtung ermittelt.

Man erhält auf diese Weise eine Verknüpfung zwischen der Löse- bzw. Öffnungsbewegung und der Schließ- bzw. Zustellbewegung des elektrischen Aktuators, bei der der Einfluss des hydraulischen Vordrucks berücksichtigt wird, welcher vom Fahrer durch Betätigung des Bremspedals während der Schließbewegung des Aktuators erzeugt wird. Dieser Vordruck kann, wie vorbeschrieben, zu einer Verschiebung in dem Verlauf der Klemmkraft führen mit der Folge, dass die Feststellbremse von einer höheren wirksamen Klemmkraft ausgeht, als dies tatsächlich der Fall ist. Über dem Vergleich zwischen dem tatsächlichen Aktuatorweg und dem zugeordneten Druckreferenzweg kann festgestellt werden, ob die Höhe des Vordrucks beim Stellen der Klemmkraft berücksichtigt werden muss bzw. ob das Drucksignal plausibel ist.

Das erfindungsgemäße Verfahren läuft in einem Regel- bzw. Steuergerät im Fahrzeug ab, das Bestandteil des Feststellbremssystems sein kann.

Weitere Vorteile und zweckmäßige Ausführungen sind den weiteren Ansprüchen, der Figurenbeschreibung und den Zeichnungen zu entnehmen. Es zeigen:

Fig. 1 einen Schnitt durch eine elektromechanische Feststellbremse für ein Fahrzeug, bei der die Klemmkraft über einen elektrischen Bremsmotor erzeugt wird,

Fig. 2 ein Schaubild mit dem zeitabhängigen Verlauf des Stroms, der Spannung und der Motordrehzahl beim Zuspannvorgang der Feststellbremse,

Fig. 3 ein Schaubild mit dem zeitabhängigen Verlauf des Stroms, der Spannung und der Motordrehzahl beim Öffnen der Feststellbremse,

Fig. 4 ein Druck-Weg-Schaubild.

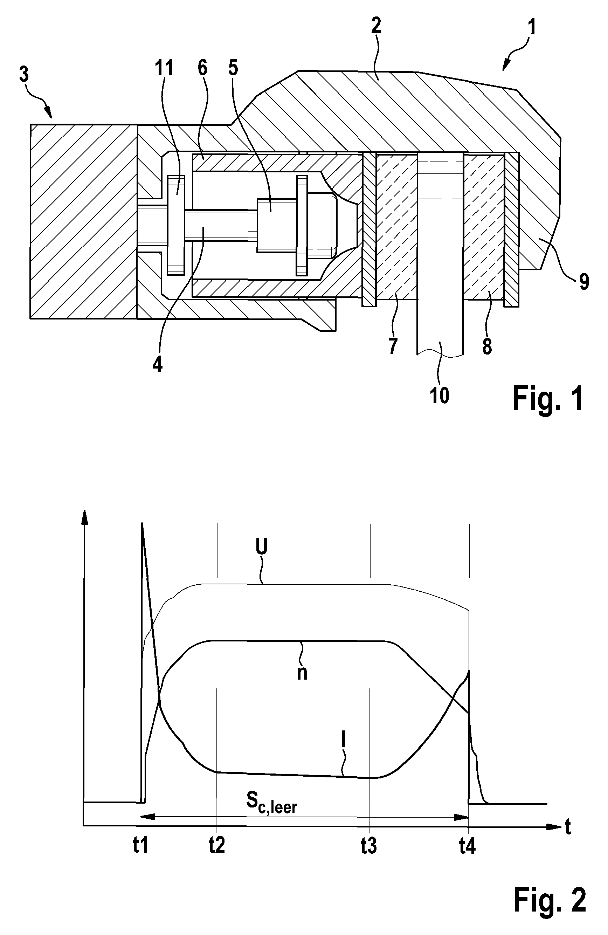

In Fig. 1 ist eine elektromechanische Feststellbremse 1 zum Festsetzen eines Fahrzeugs im Stillstand dargestellt. Die Feststellbremse 1 umfasst einen Bremssattel 2 mit einer Zange 9, welche eine Bremsscheibe 10 übergreift. Als Stellglied weist die Feststellbremse 1 einen Elektromotor als Bremsmotor 3 auf, der eine Spindel 4 rotierend antreibt, auf der ein Spindelbauteil 5 drehbar gelagert ist. Bei einer Rotation der Spindel 4 wird das Spindelbauteil 5 axial verstellt. Das Spindelbauteil 5 bewegt sich innerhalb eines Bremskolbens 6, der Träger eines Bremsbelags 7 ist, welcher von dem Bremskolben 6 gegen die Bremsscheibe 10 gedrückt wird. Auf der gegenüberliegenden Seite der Bremsscheibe 10 befindet sich ein weiterer Bremsbelag 8, der ortsfest an der Zange 9 gehalten ist.

Innerhalb des Bremskolbens 6 kann sich das Spindelbauteil 5 bei einer Drehbewegung der Spindel 4 axial nach vorne in Richtung auf die Bremsscheibe 10 zu bzw. bei einer entgegen gesetzten Drehbewegung der Spindel 4 axial nach hinten bis zum Erreichen eines Anschlags 11 bewegen. Zum Erzeugen einer Klemmkraft beaufschlagt das Spindelbauteil 5 die innere Stirnseite des Bremskolbens 6, wodurch der axial verschieblich in der Feststellbremse 1 gelagerte Bremskolben 6 mit dem Bremsbelag 7 gegen die zugewandte Stirnfläche der Bremsscheibe 10 gedrückt wird.

Die Feststellbremse kann erforderlichenfalls von einer hydraulischen Fahrzeugbremse unterstützt werden, so dass sich die Klemmkraft aus einem elektromotorischen Anteil und einem hydraulischen Anteil zusammensetzt. Bei der hydraulischen Unterstützung wird die dem Bremsmotor zugewandte Rückseite des Bremskolbens 6 mit unter Druck stehendem Hydraulikfluid beaufschlagt.

In Fig. 2 ist ein Schaubild mit dem Stromverlauf I, der Spannung U und dem Drehzahlverlauf n des elektrischen Bremsmotors zeitabhängig für einen Zuspannvorgang dargestellt. Zum Zeitpunkt t1 beginnt der Zuspannvorgang, indem eine elektrische Spannung aufgebracht und der Bremsmotor bei geschlossenem Stromkreis unter Strom gesetzt wird. Zum Zeitpunkt t2 haben die Spannung U und die Motordrehzahl n ihr Maximum erreicht. Die Phase zwischen t2 und t3 stellt die Leerlaufphase dar, in welcher der Strom I sich auf einem Minimumniveau bewegt. Daran schließt sich ab dem Zeitpunkt t3 die Kraftaufbauphase bis zum Zeitpunkt t4 an, in der die Bremsbeläge an der Bremsscheibe anliegen und mit zunehmender Klemmkraft F gegen die Bremsscheibe gedrückt werden. Zum Zeitpunkt t4 erfolgt das Abschalten des elektrischen Bremsmotors durch Öffnen des Stromkreises, so dass im weiteren Verlauf die Drehzahl n des Bremsmotors bis auf Null abfällt.

Mit der Phase des Kraftaufbaus zum Zeitpunkt t3 fällt der Kraftanstiegspunkt zusammen. Der Kraftaufbau bzw. der Verlauf der Klemmkraft F kann beispielsweise anhand des Verlaufs des Strom I des Bremsmotors ermittelt werden, der grundsätzlich den gleichen Verlauf wie die elektromechanische Klemmkraft aufweist. Ausgehend von dem niedrigen Niveau während der Leerphase zwischen t2 und t3 steigt der Stromverlauf zu Beginn des Zeitpunktes t3 steil an. Dieser Anstieg des Stroms kann detektiert und zum Bestimmen des Kraftanstiegspunktes herangezogen werden. Grundsätzlich kann der Verlauf des Kraftaufbaus aber auch aus dem Spannungs- oder Drehzahlverlauf bzw. aus einer beliebigen Kombination der Signale Strom, Spannung und Drehzahl bestimmt werden.

In Fig. 2 ist der Kurvenverlauf zeitabhängig dargestellt. Über eine beispielsweise sensorisch ermittelte Weginformation kann der zeitabhängige Verlauf in einen wegabhängigen Verlauf umgerechnet werden.

Der zwischen den Zeitpunkten t1 und t3 zurückgelegte Weg des Spindelbauteils bzw. des Bremskolbens in Stellrichtung entspricht dem Leerweg $s_{c,leer}$ des Aktuators während des Schließ- bzw. Zuspannvorgangs. Zum Zeitpunkt t1 befindet sich der elektrische Bremsmotor in seiner axial zurückgezogenen Anschlagsposition, im Zeitpunkt t3 in seiner in Richtung auf die Bremsscheibe vorgestellten Kraftübertragungsposition.

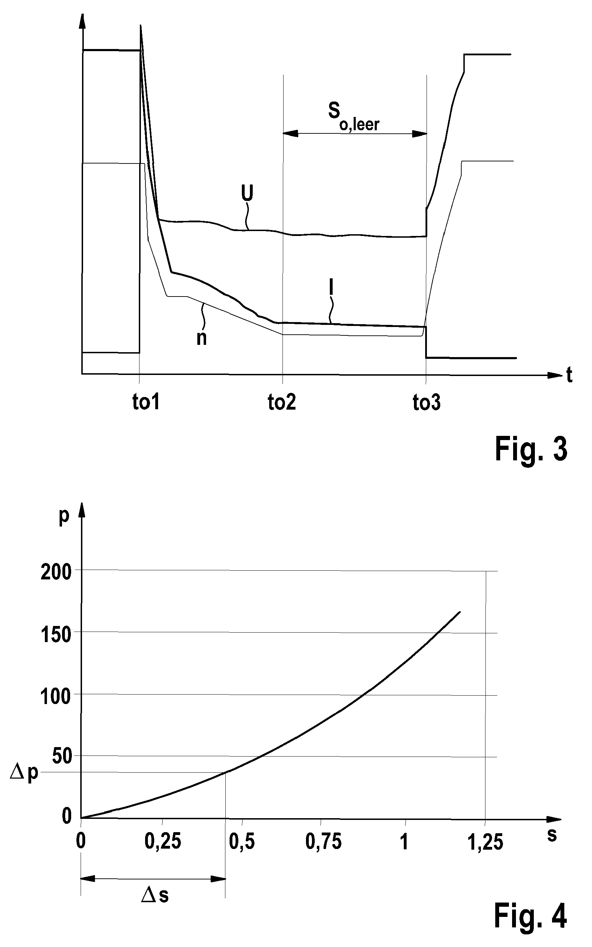

In Fig. 3 ist ein weiteres Schaubild dargestellt mit dem Kurvenverlauf des Stroms I, der Spannung U und der Drehzahl n während des Öffnungsvorgangs des Bremsmotors, bei dem der Bremskolben zurückgefahren wird. Zum Zeitpunkt to1 beginnt der Öffnungsvorgang und der von dem elektrischen Bremsmotor verstellte Bremskolben wird axial von der Bremsscheibe zurückgezogen. Zum Zeitpunkt to2 ist Lastfreiheit erreicht, es wird keine elektromechanische Klemmkraft mehr übertragen. Zum Zeitpunkt to3 hat der elektrische Bremsmotor bzw. der von dem Bremsmotor verstellte Bremskolben seine axial zurückgezogenen Anschlagsposition erreicht. Der Lastfreiheitspunkt zum Zeitpunkt to2 entspricht dem Kraftanstiegspunkt zum Zeitpunkt t3 in Fig. 2. Der zurückgelegte Weg zwischen den Zeitpunkten to2 und to3 entspricht dem Leerweg $s_{o,leer}$ während des Öffnungsvorganges.

In Fig. 4 ist ein Druck-Weg-Diagramm der hydraulischen Bremsvorrichtung dargestellt. Aus diesem Zusammenhang kann aus einem ermittelten Druck in der hydraulischen Bremsvorrichtung auf einen zugeordneten Weg geschlossen werden. Beispielsweise kann einer Druckdifferenz $\Delta p$ eine Wegdifferenz $\Delta s$ zugeordnet werden, die einer Verschiebung des Bremskolbens und damit einhergehend einer Änderung des Volumens entspricht, welches für das Hydraulikfluid zur Verfügung steht. Bei dem Druck $\Delta p$ handelt es sich beispielsweise um den vom Fahrer über eine Bremspedalbetätigung erzeugten Vordruck im Bremssystem während des Zuspannvorgangs der Feststellbremse.

Beim Verfahren zur Plausibilisierung des Druckwertes wird zunächst während eines Öffnungsvorgangs der Feststellbremse (Fig. 3) der Leerweg $S_{o,leer}$ zwischen den Zeitpunkten to2, zu dem Lastfreiheit besteht, und dem Zeitpunkt to3, bei dem maximal zurückgezogene Position erreicht ist, bestimmt. Zugleich wird der im hydraulischen System herrschende Druck bzw. Vordruck gemessen oder geschätzt.

Bei einem darauf folgenden Zuspannvorgang der Feststellbremse (Fig. 2) wird der Leerweg $S_{c,leer}$ des Aktuators zwischen den Zeitpunkten t1, zu welchem der Zuspannvorgang beginnt, und dem Zeitpunkt t3, der dem Kraftanstiegspunkt entspricht, bestimmt. Der Leerweg $S_{c,leer}$ des Aktuators beim Schließ- bzw. Zuspannvorgang wird anschließend mit einem Druckreferenzwert $s_{p,ref}$ verglichen, der sich gemäß

$$ s_{p,ref} = s_{o,leer} + \Delta s(\Delta p) $$

aus dem Aktuator-Leerweg $S_{o,leer}$ beim Öffnen und dem Differenzweg $\Delta s$ beim zugehörigen Druck bzw. Vordruck $\Delta p$ einstellt. Unter Berücksichtigung von Toleranzen muss der Aktuator-Leerweg $S_{c,leer}$ beim Schließvorgang mit dem Druckreferenzweg mit dem Druckreferenzweg $s_{p,ref}$ übereinstimmen, damit von einer Plausibilität des ermittelten Drucks ausgegangen werden kann. Nur in diesem Fall wird beim Stellen der Klemmkraft auch der hydraulische Anteil mit berücksichtigt, so dass sich die vom elektrischen Bremsmotor zu stellende elektromechanische Bremskraft um einen entsprechenden Anteil reduziert. Stimmt dagegen der Aktuator-Leerweg $S_{c,leer}$ beim Schließvorgang nicht mit hinreichender Genauigkeit mit dem Druckreferenzwert $s_{p,ref}$ überein, so wird der hydraulische Druck beim Schließvorgang nicht berücksichtigt und es muss die gesamte Klemmkraft über den elektrischen Bremsmotor gestellt werden.

**Patentansprüche**

1. Verfahren zum Einstellen der von einer Feststellbremse (1) ausgeübten Klemmkraft, die zumindest teilweise von einer elektromechanischen Bremsvorrichtung mit einem elektrischen Aktuator und bedarfsweise ergänzend von einer hydraulischen Bremsvorrichtung erzeugt wird, wobei im Falle einer Betätigung der hydraulischen Bremsvorrichtung ein hydraulischer Druck (p) an einem Bremskolben (6) unterstützend wirksam ist, der von dem elektrischen Aktuator verstellt wird, und sich die Gesamtklemmkraft aus der elektromechanischen Klemmkraft und der hydraulischen Klemmkraft zusammensetzt, **dadurch gekennzeichnet, dass** der hydraulische Druck (p) ermittelt und dem hydraulischen Druck (p) ein Druckreferenzweg ($s_{p,ref}$) zugeordnet wird, welcher mit einem aus einer motorischen Zustandsgröße (I) des Aktuators ermittelten Aktuatorweg ($s_{c,leer}$) verglichen wird, wobei für den Fall, dass der Druckreferenzweg ($s_{p,ref}$) und der Aktuatorweg ($s_{c,leer}$) signifikant voneinander abweichen, die Gesamtklemmkraft über die elektromechanische Klemmkraft gestellt wird.

2. Verfahren nach Anspruch 1, **dadurch gekennzeichnet, dass** der Aktuatorweg ($s_{c,leer}$) einem Leerweg zwischen einem Referenzpunkt und einem Kraftanstiegspunkt des Aktuators entspricht.

3. Verfahren nach Anspruch 2, **dadurch gekennzeichnet, dass** der Referenzpunkt mit dem Anschlagspunkt des Aktuators im zurückgezogenen Außerbetriebszustand zusammenfällt.

4. Verfahren nach Anspruch 2 oder 3, **dadurch gekennzeichnet, dass** der Kraftanstiegspunkt des Aktuators aus dem Strom (I), der Spannung (U) und/oder der Drehzahl (n) des Aktuators ermittelt wird.

5. Verfahren nach einem der Ansprüche 1 bis 4, **dadurch gekennzeichnet, dass** als Aktuator ein elektrischer Bremsmotor (3) verwendet wird.

6. Verfahren nach einem der Ansprüche 1 bis 5, **dadurch gekennzeichnet, dass** der Druckreferenzweg ($s_{p,ref}$) aus dem Leerweg ($s_{o,leer}$) des Aktuators und einem Differenzweg ($\Delta s$) beim anliegenden Druck ($p_{vor}$) ermittelt wird.

7. Verfahren nach Anspruch 6, **dadurch gekennzeichnet, dass** der Leerweg ($s_{o,leer}$) beim Öffnen des Aktuators ermittelt wird.

8. Verfahren nach einem der Ansprüche 1 bis 7, **dadurch gekennzeichnet, dass** der Aktuatorweg ($s_{c,leer}$) beim Schließen der elektromechanischen Bremsvorrichtung ermittelt und dem Vergleich mit dem Druckreferenzweg ($s_{p,ref}$) zugrunde gelegt wird.

9. Verfahren nach einem der Ansprüche 1 bis 8, **dadurch gekennzeichnet, dass** der Druckreferenzweg ($s_{p,ref}$) aus einer Druck-Weg-Kennlinie bestimmt wird.

10. Regel- bzw. Steuergerät zur Durchführung des Verfahrens nach einem der Ansprüche 1 bis 9.

11. Feststellbremse in einem Fahrzeug mit einem Regel- bzw. Steuergerät nach Anspruch 10.

**Claims**

1. Method for adjusting the clamping force which is applied by a parking brake (1) and is generated at least partially by an electromechanical brake device with an electric actuator, and, if necessary, additionally by a hydraulic brake device, wherein in the event of actuation of the hydraulic brake device a hydraulic pressure (p) acts in an assisting fashion on a brake piston (6) which is adjusted by the electric actuator, and the total clamping force composed of the electromechanical clamping force and the hydraulic clamping force are combined, **characterized in that** the hydraulic pressure (p) is determined and a pressure reference travel ($s_{p,ref}$) is assigned to the hydraulic pressure (p), which pressure reference travel ($s_{p,ref}$) is compared with an actuator travel ($s_{c,idle}$) which is determined from a motor state variable (I) of the actuator, wherein in the event that the pressure reference travel ($s_{p,ref}$) and the actuator travel ($s_{c,idle}$) differ significantly from one another, the total clamping force is adjusted by means of the electromechanical clamping force.

2. Method according to Claim 1, **characterized in that** the actuator travel ($s_{c,idle}$) corresponds to idle travel between a reference point and the force increase point of the actuator.

3. Method according to Claim 2, **characterized in that** the reference point coincides with the stop point of the actuator in the retracted out-of-operation state.

4. Method according to Claim 2 or 3, **characterized in that** the force increase point of the actuator is determined from the current (I), the voltage (U) and/or the rotational speed (n) of the actuator.

5. Method according to one of Claims 1 to 4, **characterized in that** an electric brake motor (3) is used as the actuator.

6. Method according to one of Claims 1 to 5, **characterized in that** the pressure reference travel ($s_{p,ref}$) is determined from the idle travel ($s_{0,idle}$) of the actuator and a difference travel ($\Delta s$) when the pressure ($p_{vor}$) is applied.

7. Method according to Claim 6, **characterized in that** the idle travel ($s_{0,idle}$) is determined when the actuator opens.

8. Method according to one of Claims 1 to 7, **characterized in that** the actuator travel ($s_{c,idle}$) is determined when the electromechanical brake device closes, and is used as the basis for the comparison with the pressure reference travel ($s_{p,ref}$).

9. Method according to one of Claims 1 to 8, **characterized in that** the pressure reference travel ($s_{p,ref}$) is determined from a pressure-travel characteristic curve.

10. Closed-loop or open-loop control unit for carrying out the method according to one of Claims 1 to 9.

11. Parking brake in a vehicle having a closed-loop or open-loop control device according to Claim 10.

**Revendications**

1. Procédé de réglage de la force de serrage exercée par un frein de stationnement (1), qui est générée au moins en partie par un dispositif de freinage électromécanique avec un actionneur électrique et au moins en complément par un dispositif de freinage hydraulique, une pression hydraulique (p) agissant avec un effet d'assistance sur un piston de frein (6) dans le cas d'un actionnement du dispositif de freinage hydraulique, le piston de frein étant déplacé par l'actionneur électrique et la force de serrage totale se composant de la force de serrage électromécanique et de la force de serrage hydraulique, **caractérisé en ce que** la pression hydraulique (p) est déterminée et une course de référence de pression ($s_{p,ref}$) est associée à la pression hydraulique (p), laquelle est comparée à une course d'actionneur ($s_{c,leer}$) déterminée à partir d'une grandeur d'état de moteur (I) de l'actionneur, la force de serrage totale, au cas où la course de référence de pression ($s_{p,ref}$) et la course d'actionneur ($s_{c,leer}$) s'écartent considérablement l'une de l'autre, étant réglée par le biais de la force de serrage électromécanique.

2. Procédé selon la revendication 1, **caractérisé en ce que** la course d'actionneur ($s_{c,leer}$) correspond à une course à vide entre un point de référence et un point d'augmentation de force de l'actionneur.

3. Procédé selon la revendication 2, **caractérisé en ce que** le point de référence coïncide avec le point de butée de l'actionneur dans l'état hors fonctionnement ramené en arrière.

4. Procédé selon la revendication 2 ou 3, **caractérisé en ce que** le point d'augmentation de force de l'actionneur est déterminé à partir du courant (I), de la tension (U) et/ou de la vitesse de rotation (n) de l'actionneur.

5. Procédé selon l'une quelconque des revendications 1 à 4, **caractérisé en ce que** l'on utilise comme actionneur un moteur de frein électrique (3).

6. Procédé selon l'une quelconque des revendications 1 à 5, **caractérisé en ce que** la course de référence de pression ($s_{p,ref}$) est déterminée à partir de la course à vide ($s_{0,leer}$) de l'actionneur et d'une course différentielle ($\Delta s$) lors de l'application de la pression ($p_{vor}$).

7. Procédé selon la revendication 6, **caractérisé en ce que** la course à vide ($s_{0,leer}$) est déterminée à l'ouverture de l'actionneur.

8. Procédé selon l'une quelconque des revendications 1 à 7, **caractérisé en ce que** la course d'actionneur ($s_{c,leer}$) est déterminée à la fermeture du dispositif de freinage électromécanique et est prise pour base pour la comparaison avec la course de référence de pression ($s_{p,ref}$).

9. Procédé selon l'une quelconque des revendications 1 à 8, **caractérisé en ce que** la course de référence de pression ($s_{p,ref}$) est déterminée à partir d'une courbe caractéristique pression-distance.

10. Appareil de réglage ou de commande pour mettre en oeuvre le procédé selon l'une quelconque des revendications 1 à 9.

11. Frein de stationnement dans un véhicule comprenant un appareil de réglage ou de commande selon la revendication 10.

**Fig. 1**

**Fig. 2**

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10361042 B3
- DE 10035220 A1